# EUROPEAN PATENT APPLICATION

(11) **EP 3 214 809 A1**
(43) Date of publication of application: **06.09.2017**
(21) Application number: 15854340.5
(22) Date of filing: 02.04.2015
(51) Int. Cl.: H04L 12/911

(54) **M2M GROUP AND NOTIFICATION RESOURCE CREATION AND INFORMATION EXCHANGE METHODS THEREFOR, AND STORAGE MEDIUM**

(30) Priority: 28.10.2014 CN 201410593936
(71) Applicant: ZTE Corporation, Shenzhen, Guangdong 518057 (CN)
(72) Inventor: YANG, Kun, Shenzhen Guangdong 518057 (CN)
(74) Representative: Brevalex
(86) International application number: PCT/CN2015/075776
(87) International publication number: WO 2016/065842

(57) **Abstract**

Disclosed are an M2M group and notification resource creation and information exchange methods therefor. The M2M group comprises at least two group members (AE1, AE2, AE3); a member representative (AE3) is designated among the group members; and the member representative (AE3) is used for representing the group members to send the attribute values of common attributes to M2M nodes outside the M2M group. Also disclosed is a computer storage medium.

## Description

### TECHNICAL FIELD

The disclosure relates to the M2M group processing technology used in the field of communications, and in particular, to an M2M group, an announcement resource creation method therefor, an information exchange method therefor and storage medium.

### BACKGROUND

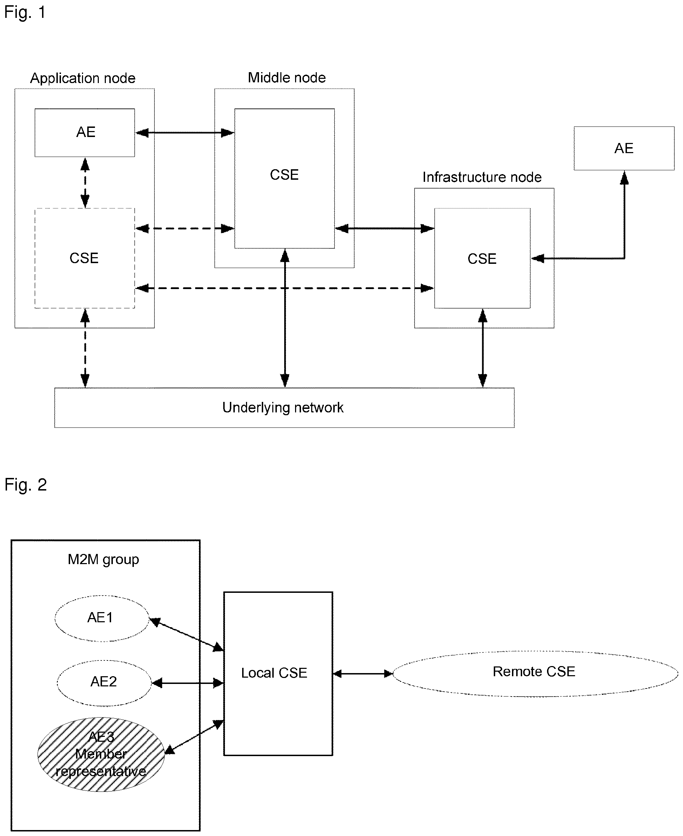

A Machine-to-Machine/Man (M2M) communication system includes M2M nodes and an underlying network. As shown in Fig. 1, M2M nodes communicate with each other through an underlying network. An M2M node at least includes an Application Entity (AE) or a Common Services Entity (CSE). The AE is a logic unit for executing a practical M2M application, and the CSE is a logic unit for managing and serving applications. An Underlying Network Services Entity (NSE), which is, for example, a Home Subscriber Server (HSS) or an MTC-Interworking Function (MTC-IWF) entity, provides device management, location services, device triggering and other services for the CSE.

M2M applications communicate with each other through the interaction of CSEs. An M2M application registers with a CSE. CSEs register with each other, so that the interaction of M2M applications can be realized through the communication of CSEs. Fig. 1 shows the architecture of an M2M system.

In the architecture of an M2M system, an application node is an end execution node, for example, a smart electric meter, a temperature measuring and controlling sensor, a fire alarm, an intelligent household electrical appliance or the like. A Middle Node (MN) is middleware, for example, a gateway, which connects an end execution node with a network-side server. An Infrastructure Node (IN) is a network-side server, and an application (i.e., an IN-AE) registered with the IN may be the management platform of an M2M Service Provider (M2M SP).

According to functions of application, the application nodes can be classified into two types including: nodes with CSEs and nodes without CSEs. An Application Dedicated Node (ADN) includes at least one AE but includes no CSE. An Application Service Node (ASN) includes at least one AE and one CSE.

When performing a batch operation on a plurality of resources, a local CSE needs to send request messages to the resources respectively and receive responses fed back from the resources based on the request messages respectively, thus leading to a high signaling overhead and causing network congestion.

### SUMMARY

In view of this, some embodiments of the disclosure are intended to provide an M2M group, an announcement resource creation method therefor, an information exchange method therefor and a storage medium, which may reduce signaling overhead and relieve the network congestion caused by high signaling overhead.

The solution of an embodiment of the disclosure is as follows.

In accordance with an aspect of an embodiment of the disclosure, an M2M group is provided, including: at least two group members. A member representative is set in the group members. The member representative is configured to send, on behalf of the group members, the attribute value of a common attribute to M2M nodes which are not in the M2M group.

In an exemplary embodiment, the group members include at least two M2M nodes having the common attribute or at least two resources which are located in an M2M node and have the common attribute.

In accordance with a second aspect of an embodiment of the disclosure, an announcement resource creation method of an M2M group is provided. The method includes: receiving an announcement resource update request which includes an announcement resource address and resource attributes, wherein the resource attributes comprise an identifier of the member representative, the member representative is a group member of an M2M group which sends, on behalf of the group members in the M2M group, the attribute value of a common attribute to M2M nodes which are not in the M2M group; creating an announcement resource according to the announcement resource address; and creating the member representative attribute of the announcement resource according to the identifier of the member representative.

In an exemplary embodiment, when the member representative is a CSE on an M2M node, the identifier of the member representative is the identifier of the CSE; when the member representative is an AE on an M2M node, the identifier of the member representative is the identifier of the AE; and when the member representative is a resource in an M2M node, the identifier of the member representative is a uniform resource identifier.

In accordance with a third aspect of an embodiment of the disclosure, an information exchange method for an M2M group is provided. The method includes: retrieving an announcement resource corresponding to the M2M group; when the announcement resource comprises a member representative attribute, acquiring an attribute value corresponding to the member representative attribute; and sending, according to the attribute value corresponding to the member representative attribute, an attribute acquisition request to acquire the attribute value of a common attribute of the group members of the M2M group.

In an exemplary embodiment, sending, according to the attribute value corresponding to the member representative attribute, an attribute acquisition request to acquire the attribute value of a common attribute of the group members of the M2M group includes: determining whether or not information to be acquired is the attribute value of a common attribute of the M2M group; and sending the attribute acquisition request when the information to be acquired is the attribute value of the common attribute.

In an exemplary embodiment, the method further includes: receiving a response message generated by the member representative based on the attribute acquisition request.

In accordance with a fourth aspect of an embodiment of the disclosure, a CSE is provided, including: a receiving unit configured to receive an announcement resource update request which includes an announcement resource address and resource attributes, wherein the resource attributes include an identifier of the member representative, the member representative is a group member of an M2M group which sends, on behalf of the group members in the M2M group, the attribute value of a common attribute to M2M nodes which are not in the M2M group; and a creation unit configured to create an announcement resource according to the announcement resource address and the member representative attribute of the announcement resource according to the identifier of the member representative.

In an exemplary embodiment, when the member representative is a CSE on an M2M node, the identifier of the member representative is the identifier of the CSE; when the member representative is an AE on an M2M node, the identifier of the member representative is the identifier of the AE; and when the member representative is a resource in an M2M node, the identifier of the member representative is a uniform resource identifier.

In accordance with a fifth aspect of an embodiment of the disclosure, a CSE is provided, including: a retrieval unit configured to retrieve an announcement resource corresponding to an M2M group; an acquisition unit configured to acquire an attribute value corresponding to a member representative attribute when the announcement resource includes the member representative attribute; and a sending unit configured to send, according to the attribute value corresponding to the member representative attribute, an attribute acquisition request to acquire the attribute value of a common attribute of the group members in the M2M group.

In an exemplary embodiment, the CSE further includes: the sending unit which is configured to determine whether or not the information to be acquired is the attribute value of a common attribute of the M2M group and send the attribute acquisition request when the information to be acquired is the attribute value of a common attribute of the M2M group.

In accordance with a sixth aspect of an embodiment of the disclosure, a computer storage medium is provided on which computer-executable instructions are stored that are executed to realize at least one of the foregoing methods.

By setting, in an M2M group, a member representative for performing a communication related to the attribute value of a common attribute, the M2M group, an announcement resource creation method thereof, an information exchange method thereof and the storage medium provided in an embodiment of the disclosure avoid the high signaling overhead and network congestion caused by the communication of a remote CSE and a local CSE with each group member for acquiring the attribute value of a common attribute.

### BRIEF DESCRIPTION OF THE DRAWINGS

Fig. 1 is a schematic diagram illustrating the structure of an M2M system;
Fig. 2 is a first schematic diagram illustrating the structure of an M2M system including the M2M group according to an embodiment of the disclosure;
Fig. 3 is a second schematic diagram illustrating the structure of an M2M system including the M2M group according to an embodiment of the disclosure;
Fig. 4 is a flowchart of an announcement resource creation method of an M2M group according to an embodiment of the disclosure;
Fig. 5 is a flowchart of the information exchange method of an M2M group according to an embodiment of the disclosure;
Fig. 6 is a schematic diagram illustrating the structure of a first type of CSE according to an embodiment of the disclosure;
Fig. 7 is a schematic diagram illustrating the structure of a second type of CSE according to an embodiment of the disclosure; and
Fig. 8 is a flowchart schematically illustrating the information exchange of M2M according to an example of the disclosure.

### DETAILED DESCRIPTION

Technical solutions of the disclosure are described below in detail with reference to accompanying drawings when read in conjunction with specific embodiments, and it should be appreciated that the preferred embodiments described below are merely for illustrating the disclosure but not to be construed as limiting the disclosure.

An M2M group is provided in the embodiment. M group members are included in the M2M group. N group members of the M group members serve as member representatives, where N is smaller than M, and generally, N is equal to 1.

Generally, the group members in the same M2M group have a lot of common attributes and attribute values. For example, the group members in the same M2M group respond to the same batch operation. Thus, a CSE needs to acquire certain information of the group members which is corresponding to the common attributes of the group members. The attribute values corresponding to the common attributes are the same or a little different from each other. Specifically, for example, the difference between the attribute values is smaller than a preset range. When the information that the CSE needs to acquire is a common attribute, then it is apparent that the common attribute can be represented by the information of a member representative.

Thus, in this case, the CSE can just exchange information with the member representative without exchanging information with each group member, thereby reducing signaling overhead and avoiding the network congestion caused by a great quantity of network data.

An application scenario of the M2M group described in the embodiment is provided below. In such scenario, the common service function for group management in a CSE enables an M2M system to perform a batch operation on a plurality of devices, applications or resources in an M2M group. In addition, the common service function for group management supports the implementation of a batch operation for a plurality of resources, to which attention is paid to, and aggregates the result of the implementation. A group resource of an M2M group represents one type of resources or a plurality of types of resources in the M2M group, that are used to perform a batch operation on the resources indicated by a member list attribute. The group resource of an M2M group includes an attribute representing the members in the group, i.e., a member list attribute, and a virtual resource for application of an operation to a resource represented by a member. When a request is sent to the virtual resource, the request is distributed to the members of the group resource indicated by the member list attribute.

The disclosure will be described below in detail with reference to specific embodiments when read in conjunction with accompanying drawings.

### Embodiment one

An M2M group in which at least two group members are included is provided in the embodiment. A member representative is set in the group members. The member representative is configured to send, on behalf of the group members, the attribute value of a common attribute to M2M nodes which are not in the M2M group.

An M2M system is shown in Fig. 2. The M2M system includes three application nodes (M2M devices such as air-conditionings), a middle node (a local CSE) and an infrastructure node (a remote CSE). The three application nodes constitute an M2M group and become three group members AE1, AE2 and AE3 of the M2M group. AE3 is a member representative. Specifically, for example, AE1 is an air-conditioning 1, AE2 is an air-conditioning 2, and AE3 is an air-conditioning 3. The M2M group is connected to the local CSE thereof. The local CSE is, for example, a home gateway. The remote CSE may be, for example, a mobile phone, tablet, Personal Computer (PC) or another electronic device of the user. The local CSE and remote CSE both are M2M nodes which are not in the M2M group.

If the three air-conditionings are located in the same room, the user can control the operations of the three air-conditionings uniformly or in batches through the remote CSE and then through the local CSE. Specifically, for example, the turn-on control and the target temperature control generated by the remote CSE are received uniformly. In a situation based on the working environment of the three air-conditionings and the uniform control, the room temperatures detected by the three air-conditionings after the three air-conditionings operate for a period of time are similar to each other, which can be seen from the likely sameness of or minor difference among the room temperatures detected by the three air-conditionings. In this case, if the user desires to have a rough idea of the room temperature using the remote CSE, the user only needs to acquire the temperature of the member representative rather than exchanges information with each of the air-conditionings to acquire temperatures. In this example, if the remote CSE desires to check the temperatures of the three air-conditionings at this time, then the remote CSE only needs to acquire the temperature of the air-conditioning 3 with the aid of the local CSE rather than sends a temperature acquisition request to each of the three air-conditionings and then receives a feedback from each of the three air-conditionings, thus reducing signaling overhead and avoiding problems such as network congestion.

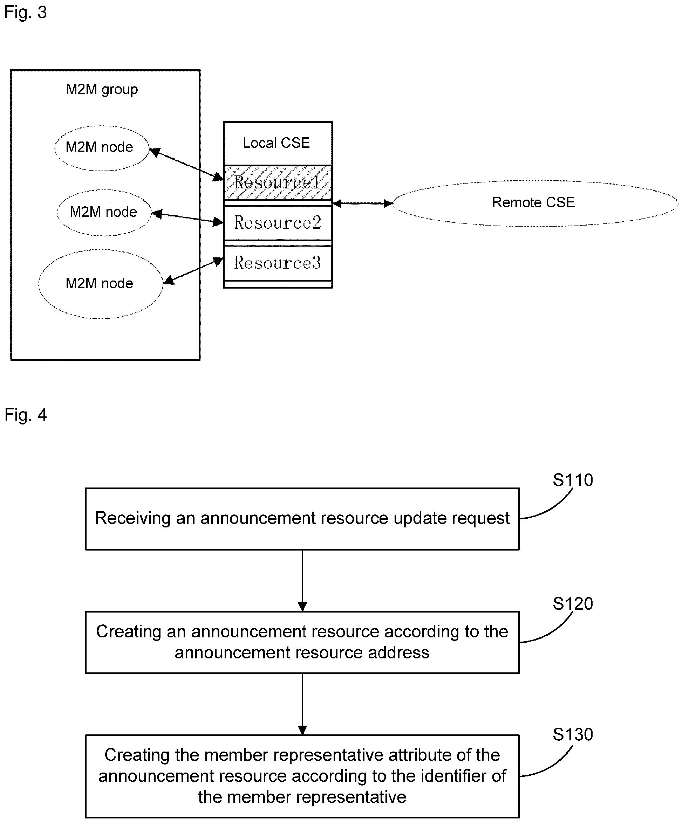

An M2M system is shown in Fig. 3. The M2M system includes three application nodes (M2M devices such as air-conditionings), a middle node, i.e., a local CSE, and a remote CSE. The local CSE includes three resources represented by Resource1, Resource2 and Resource3 which are corresponding to the three application nodes. Resource1 processes the data reported by a first application node, Resource2 processes the data reported by a second application node, and Resource3 processes the data reported by a third application node. These three resources in the local CSE constitute an M2M group. Resource1 is the member representative of the M2M group. These three resources Resource1, Resource2 and Resource3 can perform a processing such as a data storage processing or a data conversion processing (e.g. an analog-digital conversion) on the data reported by the application nodes.

If the remote CSE performs a batch operation on the application nodes and the response condition information obtained after the batch operation is performed on the application nodes are generally identical and the application nodes can be represented by the member representative, then it is apparent that the response condition information recorded in these three resources Resource1, Resource2 and Resource3 may be identical. In this case, if the remote CSE desires to acquire the response condition information, then the remote CSE only needs to communicate with the member representative to obtain the information reported by the member representative, thus reducing the amount of the information exchanged and avoiding network congestion.

In conclusion, the attribute value of the common attribute is information which is generated by group members and whose difference is smaller than a preset range. Specifically, for example, a user uses a remote CSE (a mobile phone) to control the opening of each window of his/her house through an underlying network and a home gateway before arriving at home. Different windows are controlled by different smart switches which are equivalent to group members of an M2M group. The home gateway is equivalent to a local CSE in the M2M group, and the mobile phone of the user is equivalent to a remote CSE. The user opens windows by centrally controlling the respective smart switches. When the user desires to check whether or not each smart switch has received and executed an instruction sent from the mobile phone of the user, if no accident happens (for example, a certain smart switch malfunctions), the instructions received by the smart switches from the mobile phone are the same, and each smart switch opens a corresponding window after receiving the instruction. The information is common attributes of the members in an M2M group that are mentioned in the embodiment. At this time, if the user desires to know the operation conditions of the group members, i.e., the smart switches, the user only needs to use the mobile phone to acquire the information fed back by one of the smart switches through the home gateway. Thus, the mobile phone only needs to exchange information with the member representative. In such case, the mobile phone receives the attribute value, for example, 'open' or 'close' of the common attribute.

During a specific implementation process, if the information that a CSE desires to know is not a common attribute of the members in an M2M group, then a remote or local CSE needs to exchange information with each group member to acquire the information needed.

Generally, one member representative is set in one M2M group. However, two or N member representatives may be set in an M2M group, where N is an integer smaller than the number of all the members in the M2M group. Specifically, when there are two member representatives in an M2M group, one of the two member representatives may be set as a primary member representative while the other as a backup member representative. If a common attribute that a CSE desires to acquire cannot be acquired because a fault occurs in an information terminal during a communication process or because of the fault of the primary member representative, then the backup member representative can send a corresponding common attribute to an M2M node such as a CSE.

In addition, if each of M2M nodes which are not in an M2M group desires to know the common attributes of the group members in the M2M group, then the M2M nodes which are not in the M2M group each sends a request to each member node, which may lead to congestion and a response delay. If there is more than one member representative in the M2M group, then the load can be shared by the member representatives. As to how the load is specifically shared, it can be preset that a part of the common attributes are fed back by a first member representative to the other M2M nodes and a part of the common attributes are fed back by other member representatives different from the first member representative to the other M2M nodes.

In conclusion, an M2M group is provided in the embodiment, and a plurality of group members and at least one member representative are included in the M2M group, so that the other M2M nodes can acquire the common attributes of the group members in the M2M group by exchanging information with the member representative.

### Embodiment two

As shown in Fig. 4, an announcement resource creation method of an M2M group is provided in the embodiment. The method includes steps S110-S130.

In step S110, an announcement resource update request is received, which includes an announcement resource address and resource attributes. The resource attributes include an identifier of the member representative. The member representative is a group member of the M2M group which sends, on behalf of the group members in the M2M group, the attribute value of a common attribute to M2M nodes which are not in the M2M group.

In step S120, an announcement resource is created according to the announcement resource address.

In step S130, the member representative attribute of the announcement resource is created according to the identifier of the member representative.

The M2M group includes at least two types of group members.

In case of a first type, when the member representative is a CSE on an M2M node, the identifier of the member representative is the identifier CSE-ID of the CSE.

In case of a second type, when the member representative is an AE on an M2M node, the identifier of the member representative is the identifier AE-ID of the AE; and

In case of a third type, the group member is a resource in an M2M node; each share of the resource is corresponding to at least one specific M2M node; the resource processes the data reported by a corresponding M2M node. The reported data includes the common attribute.

When the member representative is an entity on an M2M node, the identifier of the member representative is an entity identifier ID, and when the member representative is a resource in an M2M node, the identifier of the member representative is a Uniform Resource Identifier (URI).

The M2M node which executes Steps S110-S130 in the embodiment is the remote CSE in the M2M group. The remote CSE adds a member representative attribute in attributes of the announcement resource when creating the announcement resource. Specifically, the member representative attribute may be: the identifier of the member representative. This makes the attributes of the announcement resource fundamentally different from those of an announcement resource for which the member representative of an M2M group is not set, because, in the subsequent information exchange, the remote CSE can acquire the common attribute of the M2M group merely by exchanging information with the member representative, thus reducing the amount of the information exchanged and relieving network congestion.

The method described in the embodiment is used for the M2M group described in embodiment one to establish an announcement resource in a remote CSE.

### Embodiment three

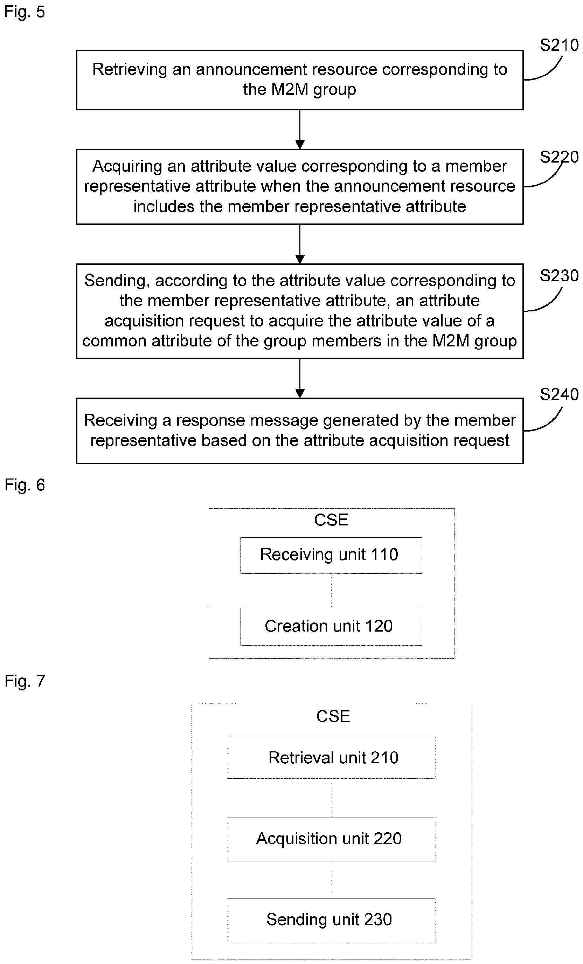

As shown in Fig. 5, an information exchange method for an M2M group is provided. The method includes steps S210-S230.

In step 210, an announcement resource corresponding to the M2M group is retrieved.

In step 220, an attribute value corresponding to a member representative attribute is acquired when the announcement resource includes the member representative attribute.

In step 230, according to the attribute value corresponding to the member representative attribute, an attribute acquisition request is sent to acquire the attribute value of a common attribute of the group members in the M2M group.

According to the method for acquiring a common attribute of the group members in an M2M group in the embodiment, an attribute acquisition request is merely sent to a member representative instead of each group member. As such, the number of request messages and the quantity of the data sent are reduced, such that network congestion is relieved. Meanwhile, because a request is only sent to the member representative, only the response returned from the member representative is received, thus apparently reducing the number of the responses sent. Moreover, because the quantity of the data born in the response is relatively reduced, network congestion is relieved further.

In an exemplary embodiment, Step 230 includes: determining whether or not the information to be acquired is the attribute value of a common attribute of the M2M group; and sending the attribute acquisition request when the information to be acquired is the attribute value of the common attribute.

Whether or not the information to be acquired is the attribute value of a common attribute can be specifically determined by determining whether or not the information to be acquired is information related to a batch processing performed on the group members. Alternatively, a group attribute may be preset in attributes of an announcement resource, common attribute items may be recorded corresponding to the group attribute. Whether or not the information to be acquired is the attribute value of a common attribute can be determined by searching these common attribute items. Specifically, for example, in a case where common attribute information items are recorded in attributes of the announcement resource of a corresponding air-conditioning group, when a remote CSE, for example, a personal computer (PC), desires to know the temperature of each group member, if it is determined that temperature is a common attribute item, then it can be determined that the information to be determined currently is the common attribute.

As shown in Fig. 5, the method further includes step S240.

In step 240, a response message is received, which is generated by the member representative based on the attribute acquisition request.

The attribute value of the common attribute specified in the attribute acquisition request, for example, the current temperature value of an air-conditioner, is born in the response message.

In a specific implementation process, the member representatives include a primary member representative and a backup member representative. In such case, the attribute acquisition request may be initially sent to the primary member representative. If no response message is fed back from the primary member representative within a specific time period, then the attribute acquisition request is resent to the backup member representative.

If there is a plurality of member representatives in the M2M group, when different member representatives feed-back different common attributes respectively to the CSE, Step 230 further includes a step of determining, according to the information to be acquired, the member representative which receives the attribute acquisition request.

### Embodiment four

As shown in Fig. 6, a CSE is provided in the embodiment. The CSE includes a receiving unit 110 and a creation unit 120.

The receiving unit 110 is configured to receive an announcement resource update request which includes an announcement resource address and resource attributes. The resource attributes comprise an identifier of the member representative. The member representative is a group member of an M2M group which sends, on behalf of the group members in the M2M group, the attribute value of a common attribute to M2M nodes which are not in the M2M group.

The creation unit 120 is configured to create an announcement resource according to the announcement resource address and to create the member representative attribute of the announcement resource according to the identifier of the member representative.

The specific structure of the receiving unit 110 may include a communication interface which may be a wired or a wireless communication interface. The wired communication interface may be a cable communication interface such as an RJ45 communication interface, or an optical cable communication interface such as an optical fiber interface. The wireless communication interface may be a receiving antenna.

The specific structure of the creation unit 120 may include a processor which may be an Application Processor (AP), a Central Processing unit (CPU), a Microcontroller Unit (MCU), a Digital Signal Processor (DSP), a Programmable Logic Controller (PPLC), or another electronic element having a processing function. The processor is connected with the communication interface through a bus or in another connection manner. The processor can realize corresponding functions of the creation unit 120 by running executable codes.

In an exemplary embodiment, when the member representative is a CSE on an M2M node, the identifier of the member representative is the identifier of the CSE. When the member representative is an AE on an M2M node, the identifier of the member representative is the identifier of the AE. When the member representative is a resource in an M2M node, the identifier of the member representative is a uniform resource identifier.

The CSE mentioned in the embodiment is a Common Services Entity, and generally, the remote CSE of the M2M group. The CSE mentioned in the embodiment provides hardware for realizing the method described in embodiment two. The beneficial effects of the CSE mentioned in the embodiment can be understood with reference to embodiment two.

### Embodiment five

As shown in Fig. 7, a CSE is provided in the embodiment. The CSE includes a retrieval unit 210, an acquisition unit 220 and a sending unit 230.

The retrieval unit 210 is configured to retrieve an announcement resource corresponding to an M2M group.

The acquisition unit 220 is configured to acquire an attribute value corresponding to a member representative attribute when the announcement resource includes the member representative attribute.

The sending unit 230 is configured to send, according to the attribute value corresponding to the member representative attribute, an attribute acquisition request to acquire the attribute value of a common attribute of the group members in the M2M group.

The specific structure of the retrieval unit 210 and the acquisition unit 220 may include a processor which may be an AP, a CPU, an MCU, a DSP, a PLC, or another electronic element having a processing function. The processor is connected with a communication interface through a bus or in another connection manner. The processor can realize corresponding functions of the retrieval unit 210 and the acquisition unit 220 by running executable codes. The retrieval unit 210 and the acquisition unit 220 may be integrated to correspond to the same processor, or the retrieval unit 210 and the acquisition unit 220 correspond to different processors respectively. When the retrieval unit 210 and the acquisition unit 220 are integrated to correspond to the same processor, the processor can process the functions of the different units through time division multiplexing or through concurrent threads.

The specific structure of the sending unit 230 may include a communication interface which may be a wired or a wireless communication interface. The wired communication interface may be a cable communication interface such as an RJ45 communication interface, or an optical cable communication interface such as an optical fiber interface. The wireless communication interface may be a receiving antenna.

The CSE further includes: the sending unit 23 configured to determine whether or not the information to be acquired is the attribute value of a common attribute of the M2M group and send the attribute acquisition request when the information to be acquired is the attribute value of a common attribute of the M2M group.

The CSE mentioned in the embodiment is a Common Services Entity, and generally, a remote CSE in the M2M group. The CSE mentioned in the embodiment provides hardware for realizing the method described in embodiment three. The beneficial effects of the CSE mentioned in the embodiment can be understood with reference to embodiment three.

The CSE described in the embodiment and that described in the foregoing embodiment may be the same CSE. That is, a CSE including the receiving unit 110, the creation unit 120, the retrieval unit 210, the acquisition unit 220 and the sending unit 230 is provided by combining the embodiment with the foregoing embodiment.

A computer storage medium is also provided on which computer-executable instructions are stored that are executed to realize at least one of the foregoing methods which may specifically be, for example, the method shown in Fig. 4, Fig. 5 and/or Fig. 8.

The computer storage medium described in the embodiment may be a dynamic storage device, a Read-Only Memory (ROM), a Random Access Memory (RAM), a diskette, a compact disc or another medium for storing program codes. In the embodiment, the computer storage medium is a non-transient storage medium so as to storage the program codes stably.

Two specific examples are provided below in combination with specific embodiments.

### Example one

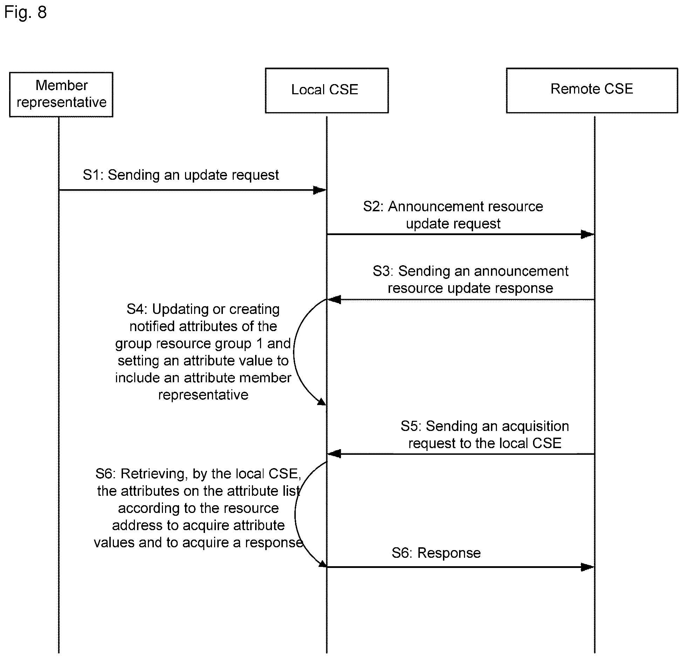

As shown in Fig. 8, the method described in the example includes steps S1-S6.

In step S1, the representative AE or CSE of a group 1 preset by an M2M system sends an update request to a local CSE. The update request includes: 1) a resource address including the URI of a group resource group 1 of an M2M group; and 2) announceable attributes including a member representative, the URIs of a representative AE or CSE whose member representative value is set to be a preset group.

The group members of the M2M group 1 are resources in the local CSE.

In step S2, the local CSE reads the resource address and sends, according to attribute values of announced attributes in the group resource group 1, an announcement resource update request to a remote CSE. The announcement resource update request includes: 1) a resource address including the URI of an announcement resource group1, i.e., Annc; and 2) content (containing the attributes of a resource needing creating) including member representative, and the URIs of a representative AE or CSE whose member representative value is set to be the group. The URI is acquired from the announceable attributes in the update request message.

In step S3, the remote CSE reads the resource address, creates a member representative attribute in the announcement resource group1, i.e., Annc, sets the URI of the representative AE or CSE whose attribute value is the group, and sends an announcement resource update response to the local CSE.

In step S4, after receiving the response message from the remote CSE, the local CSE updates or creates notified attributes of the group resource group1 and sets an attribute value to include an attribute member representative.

In step S5, when desiring to acquire one or more common attribute values (that are corresponding to the common messages mentioned in the foregoing embodiments) of all the AEs or CSEs in the group, the remote CSE retrieves an attribute member representative in the announcement resource group1, i.e. Annc. If there is an attribute member representative in the announcement resource group1, i.e. Annc, the remote CSE sends an acquisition request to the local CSE according to the attribute value of the attribute member representative. The request message includes: 1) a resource address, i.e. the URI of the representative AE or CSE of the group; and 2) content (containing the attributes of a resource to be acquired) including attribute names, that is, a name list on which the name/names of the one or more common attributes are listed.

In step S6, the local CSE retrieves the attributes on the attribute list according to the resource address to acquire attribute values and feeds back the acquired attribute values to the remote CSE through an acquisition response.

### Example two

The method described in the example includes steps S11-S16.

In step S11, the representative AE or CSE of a group 1 preset by an M2M user sends an update request to a local CSE. The update request includes: 1) a resource address including the URI of a group resource group 1 of an M2M group; and 2) announceable attributes including member representative, the identifier AE-ID or CSE-ID of a representative AE or CSE whose member representative value is set to be a preset group.

In step S12, the local CSE reads the resource address and sends, according to attribute values of announced attributes in the group resource group1, an announcement resource update request to a remote CSE. The message includes: 1) a resource address including the URI of an announcement resource group1, i.e. Annc; and 2) content (containing the attributes of a resource to be created) including member representative, and the identifier AE-ID or CSE-ID of the representative AE or CSE. The AE-ID or CSE-ID is acquired from the announceable attributes in the update request message.

In step S13, the remote CSE reads the resource address, creates a member representative attribute in the announcement resource group1, i.e. Annc, sets the identifier AE-ID or CSE-ID of the representative AE or CSE whose attribute value is the group, and sends an announcement resource update response to the local CSE.

In step S14, after receiving the response message from the remote CSE, the local CSE updates or creates notified attributes of the group resource group 1 and sets an attribute value to include an attribute member representative.

In step 15, when desiring to acquire one or more common parameter values of all the AEs or CSEs in the group, the remote CSE retrieves an attribute member representative in the announcement resource group1, i.e. Annc. If there is an attribute member representative in the announcement resource group1, i.e. Annc, the remote CSE sends an acquisition request to the representative AE or CSE of the group according to the attribute value of the attribute member representative. The request message includes: 1) a node identifier including the identifier AE-ID or CSE-ID of the representative AE or CSE of the group; and 2) content (containing the parameters of a node to be acquired) including parameter names, i.e., a name list on which the name/names of the one or more common parameters are listed.

In step S16, the representative AE or CSE of the group retrieves the parameters on the parameter list to acquire parameter values and feeds back the acquired parameter values to the remote CSE through an acquisition response.

While specific embodiments of the disclosure have been described above, it should be appreciated that these embodiments are not to be construed as limiting the scope of protection of the disclosure and that any modifications devised without departing from the principle of the disclosure should fall into the scope of protection of the disclosure.

## Claims

1. A Machine-to-Machine/Man, M2M, group, comprising: at least two group members, wherein
a member representative is set in the group members; and
the member representative is configured to send, on behalf of the group members, the attribute value of a common attribute to M2M nodes which are not in the M2M group.

2. The M2M group according to claim 1, wherein
the group members comprise at least two M2M nodes having the common attribute or at least two resources which are located in an M2M node and have the common attribute.

3. An announcement resource creation method for a Machine-to-Machine/Man, M2M, group, comprising:
receiving an announcement resource update request which comprises an announcement resource address and resource attributes, wherein the resource attributes comprise an identifier of the member representative, the member representative is a group member of an M2M group which sends, on behalf of the group members in the M2M group, the attribute value of a common attribute to M2M nodes which are not in the M2M group;
creating an announcement resource according to the announcement resource address; and
creating the member representative attribute of the announcement resource according to the identifier of the member representative.

4. The method according to claim 3, wherein
when the member representative is a Common Services Entity, CSE, on an M2M node, the identifier of the member representative is the identifier of the CSE;
when the member representative is an Application Entity, AE, on an M2M node, the identifier of the member representative is the identifier of the AE; and
when the member representative is a resource in an M2M node, the identifier of the member representative is a uniform resource identifier.

5. An information exchange method for a Machine-to-Machine/Man, M2M, group, comprising:
retrieving an announcement resource corresponding to the M2M group;
when the announcement resource comprises a member representative attribute, acquiring an attribute value corresponding to the member representative attribute; and
sending, according to the attribute value corresponding to the member representative attribute, an attribute acquisition request to acquire the attribute value of a common attribute of the group members of the M2M group.

6. The method according to claim 5, wherein sending, according to the attribute value corresponding to the member representative attribute, an attribute acquisition request to acquire the attribute value of a common attribute of the group members of the M2M group comprises:
determining whether or not the information to be acquired is the attribute value of a common attribute of the M2M group; and
sending the attribute acquisition request when the information to be acquired is the attribute value of the common attribute.

7. The method according to claim 5 or 6, further comprising:
receiving a response message which is generated by the member representative based on the attribute acquisition request.

8. A Common Services Entity, CSE, comprising:
a receiving unit configured to receive an announcement resource update request which comprises an announcement resource address and resource attributes, wherein the resource attributes comprise an identifier of the member representative, the member representative is a group member of a Machine-to-Machine/Man, M2M, group which sends, on behalf of the group members in the M2M group, the attribute value of a common attribute to M2M nodes which are not in the M2M group; and
a creation unit configured to create an announcement resource according to the announcement resource address, and to create the member representative attribute of the announcement resource according to the identifier of the member representative.

9. The CSE according to claim 8, wherein
when the member representative is a CSE on an M2M node, the identifier of the member representative is the identifier of the CSE;
when the member representative is an Application Entity, AE, on an M2M node, the identifier of the member representative is the identifier of the AE; and
when the member representative is a resource in an M2M node, the identifier of the member representative is a uniform resource identifier.

10. A Common Services Entity, CSE, comprising:
a retrieval unit configured to retrieve an announcement resource corresponding to a Machine-to-Machine/Man, M2M, group;
an acquisition unit configured to acquire an attribute value corresponding to a member representative attribute when the announcement resource comprises the member representative attribute; and
a sending unit configured to send, according to the attribute value corresponding to the member representative attribute, an attribute acquisition request to acquire the attribute value of a common attribute of the group members in the M2M group.

11. The CSE according to claim 10, further comprising:
the sending unit is configured to determine whether or not information to be acquired is the attribute value of a common attribute of the M2M group, and when the information to be acquired is the attribute value of a common attribute of the M2M group, send the attribute acquisition request.

12. A computer storage medium having stored thereon computer-executable instructions for executing at least one of the methods of claims 3-7.
